(19) **Europäisches Patentamt**

**European Patent Office**

**Office européen des brevets**

(11) **EP 1 207 042 B1**

(12) **EUROPEAN PATENT SPECIFICATION**

(45) Date of publication and mention
of the grant of the patent:
**21.01.2004 Bulletin 2004/04**

(51) Int Cl.[7]: **B32B 27/36**, B65D 30/14

(21) Application number: **01309663.1**

(22) Date of filing: **15.11.2001**

(54) **Laminated film and packaging bag**

Mehrschichtfilm und ein Verpackungsbeutel

Feuille laminée et sachet d'emballage

(84) Designated Contracting States:
**BE DE FR GB IT**

(30) Priority: **16.11.2000 JP 2000349830**

(43) Date of publication of application:
**22.05.2002 Bulletin 2002/21**

(73) Proprietors:
• **Shikoku Kakoh Co.,Ltd.**
**Okawa-gun, Kagawa-ken (JP)**
• **Mitsubishi Chemical Corporation**
**Chiyoda-ku, Tokyo (JP)**
Designated Contracting States:
**DE**

(72) Inventors:
• **Futagawa, Takashi**
**Shirotori-cho, Okawa-gun, Kagawa-ken (JP)**
• **Ohno, Katsutoshi**
**Yokkaichi-shi, Mie-ken (JP)**

(74) Representative: **Benson, John Everett**
**J. A. Kemp & Co.,**
**14 South Square,**
**Gray's Inn**
**London WC1R 5LX (GB)**

(56) References cited:
**WO-A-99/27350**

• **DATABASE WPI Section Ch, Week 200020
Derwent Publications Ltd., London, GB; Class
A23, AN 2000-232291 XP002190691 & JP 2000
052524 A (SHIKOKU KAKO KK), 22 February
2000 (2000-02-22)**
• **DATABASE WPI Section Ch, Week 199922
Derwent Publications Ltd., London, GB; Class
A23, AN 1999-259606 XP002190692 & JP 11
077937 A (SHIKOKU KAKO KK), 23 March 1999
(1999-03-23)**
• **DATABASE WPI Section Ch, Week 200023
Derwent Publications Ltd., London, GB; Class
A23, AN 2000-266135 XP002190693 & JP 2000
072150 A (SHIKOKU KAKO KK), 7 March 2000
(2000-03-07)**
• **DATABASE WPI Section Ch, Week 200016
Derwent Publications Ltd., London, GB; Class
A23, AN 2000-175962 XP002190694 & JP 2000
025184 A (SHIKOKU KAKO KK), 25 January 2000
(2000-01-25)**
• **DATABASE WPI Section Ch, Week 200128
Derwent Publications Ltd., London, GB; Class
A23, AN 2001-269200 XP002190695 & JP 2001
054940 A (SHIKOKU KAKO KK), 27 February
2001 (2001-02-27)**
• **MELVEGER A J: "LASER-RAMAN STUDY OF
CRYSTALLINITY CHANGES IN
POLY(ETHYLENE TERPHTALATE)" JOURNAL
OF POLYMER SCIENCE, INTERSCIENCE
PUBLISHERS, XX, vol. 10, no. 1, January 1972
(1972-01), pages 317-322, XP001027655**

Printed by Jouve, 75001 PARIS (FR)

**Description**

The present invention relates to a laminated film and a packaging bag, and more particularly, to a laminated film which is prevented from being curled upon heat-sealing, and a packaging bag suitably used in a filling and packaging machine, which is produced by heat-sealing the laminated film.

Conventionally, various food and non-food products are packaged by a filling and packaging machine, and there have been used packaging bags produced by heat-sealing an unstretched laminated film. For example, in the case of packaging bags for foods such as hams and sausages, which are required to exhibit a gas-barrier property, there have been used such an unstretched laminated film comprising an outermost layer composed of polyethylene terephthalate (PET) or polyethylene naphthalate (PEN) having an excellent heat resistance, an innermost layer composed of a heat-sealing resin and an intermediate layer composed of a gas-barrier resin, or the like.

However, such conventional packaging bags tend to be curled at an open edge thereof, thereby causing problems when used in a filling and packaging machine. In addition, the unstretched laminated film itself tends to undergo considerable curling prior to being formed into a packaging bag by heat-sealing. For this reason, especially upon the production of pillow-type packaging bags, sealing defects tend to be caused during a so-called center seal process in which opposite edges of the unstretched laminated film are overlapped on each other and heat-sealed together.

As a result of the present inventors' earnest studies for solving the above problems, it has been found that a laminated film produced by a co-extrusion inflation method, having an outermost layer composed of a polymer capable of satisfying specific parameters, is free from curling upon heat-sealing. The present invention has been attained on the basis of this finding.

is an object of the present invention to provide a laminated film which is free from curling upon heat-sealing.

It is another object of the present invention to provide a packaging bag suitably used in a filling and packaging machine.

To accomplish the aims, in a first aspect of the present invention, there is provided a laminated film produced by a co-extrusion inflation method, comprising:

an outermost layer (A) comprising a polybutylene terephthalate homopolymer, a polybutylene terephthalate copolymer or a mixture of the polybutylene terephthalate homopolymer and the polybutylene terephthalate copolymer; and
an innermost layer (B) comprising a heat-sealing resin,
said outermost layer (A) having a shape factor of not less than 2.2, which shows a peak shape of Raman spectrum thereof and is represented by the following formula (1) :

$$\text{Shape factor} = La/Lb \qquad (1)$$

wherein La and Lb represent peak widths being present on higher- and lower-frequency sides, respectively, relative to a perpendicular line drawn from a peak top to a base line formed by a tangent line taken before and after the peak based on carbonyl stretching vibration, and being taken along a horizontal line at a height corresponding to one half of an intensity of the peak.

In a second aspect of the present invention, there is provided a packaging bag obtained by heat-sealing the laminated film as defined in the first aspect.

In a third aspect of the present invention, there is provided a food-packaging bag obtained by heat-sealing the laminated film as defined in the first aspect.

In a fourth aspect of the present invention, there is provided a laminated film produced by a co-extrusion inflation method, comprising:

an outermost layer (A) comprising a polybutylene terephthalate homopolymer, a polybutylene terephthalate copolymer or a mixture of the polybutylene terephthalate homopolymer and the polybutylene terephthalate copolymer;
an adhesive resin layer comprising a modified polyolefin resin; and
an innermost layer (B) comprising a heat-sealing resin,
said outermost layer (A) having a shape factor of not less than 2.2, which shows a peak shape of Raman spectrum thereof and is represented by the following formula (1):

$$\text{Shape factor} = La/Lb \tag{1}$$

wherein La and Lb represent peak widths being present on higher- and lower-frequency sides, respectively, relative to a perpendicular line drawn from a peak top to a base line formed by a tangent line taken before and after the peak based on carbonyl stretching vibration, and being taken along a horizontal line at a height corresponding to one half of an intensity of the peak.

In a fifth aspect of the present invention, there is provided a laminated film produced by a co-extrusion inflation method, comprising:

an outermost layer (A) comprising a polybutylene terephthalate homopolymer, a polybutylene terephthalate copolymer or a mixture of the polybutylene terephthalate homopolymer and the polybutylene terephthalate copolymer;

a first adhesive resin layer comprising a modified polyolefin resin;

a gas-barrier resin layer (C) comprising polyamide, an ethylene-vinyl acetate copolymer saponification product, polyethylene terephthalate, polyethylene naphthalate or polycarbonate;

a second adhesive resin layer comprising a modified polyolefin resin; and

an innermost layer (B) comprising a heat-sealing resin,

said outermost layer (A) having a shape factor of not less than 2.2, which shows a peak shape of Raman spectrum thereof and is represented by the following formula (1):

$$\text{Shape factor} = La/Lb \tag{1}$$

wherein La and Lb represent peak widths being present on higher- and lower-frequency sides, respectively, relative to a perpendicular line drawn from a peak top to a base line formed by a tangent line taken before and after the peak based on carbonyl stretching vibration, and being taken along a horizontal line at a height corresponding to one half of an intensity of the peak.

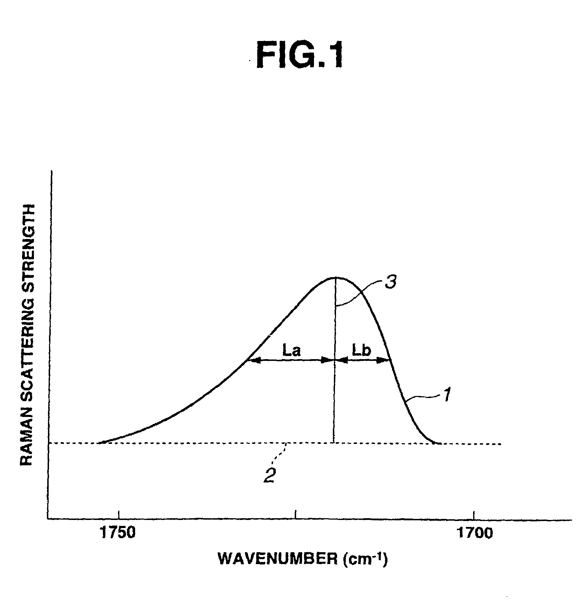

Fig. 1 is an explanatory view of a peak shape of Raman spectrum.

The present invention will be described in detail below.

First, the laminated film of the present invention is described. The laminated film of the present invention comprises at least an outermost layer (A) and an innermost layer (B), which is produced by a co-extrusion inflation method. The outermost layer (A) is composed of a polybutylene terephthalate homopolymer and/or a polybutylene terephthalate copolymer ("polybutylene terephthalate" is hereinafter referred to merely as "PBT"). The innermost layer (B) is composed of a heat-sealing resin.

As the PBT homopolymers and copolymers constituting the outermost layer (A), there may be used known PBT polymers or resins ordinarily used in the application field of packaging films. As other copolymerized components of the PBT copolymers, there may be exemplified dicarboxylic acids such as isophthalic acid, phthalic acid, 2,6-naphthalenedicarboxylic acid, adipic acid, sebacic acid, oxycarboxylic acids such as p-oxybenzoic acid, or the like; and glycols such as ethylene glycol, diethylene glycol, propylene glycol, 1,4-cyclohexane dimethanol, neopentyl glycol, polyethyleneoxide glycol, polypropyleneoxide glycol, polytetramethyleneoxide glycol or the like. These dicarboxylic acids and glycols may be respectively used singly or in the form of a mixture of any two or more thereof. The PBT copolymer contains PBT units derived from terephthalic acid and butylene glycol in an amount of usually 70 to 99 mol%, preferably 85 to 99 mol%, and the remainder of the PBT copolymer is composed of units derived from the above-described other copolymerized components.

In the present invention, among the above other copolymerized components, polytetramethyleneoxide glycol is preferred. The polytetramethyleneoxide glycol usable in the present invention preferably has a number-average molecular weight of 300 to 6,000, more preferably 500 to 2,000.

The outermost layer (A) preferably contains as an anti-blocking agent, organic or inorganic fine particles from the standpoint of good anti-blocking property upon storage of stacked packaging bags.

Examples of the anti-blocking agent composed of organic fine particles may include fine particles of homopolymers or copolymers of polystyrene, polyethylene, polyamides, polyesters, polyacrylic acid esters, polymethacrylic acid esters, epoxy resins, polyvinyl acetate, polyvinyl chloride or the like, which may further contain a cross-linking agent. Examples of the anti-blocking agent composed of inorganic fine particles may include fine particles of talc, kaolin, silica or calcium carbonate, glass powder, or the like.

The anti-blocking agent usually has an average particle size of about 1 to 10 μm. The amount of the anti-blocking agent used is usually in the range of 100 to 10,000 ppm, preferably 1,000 to 5,000 ppm based on resins. In the present invention, among these anti-blocking agents, organic fine particles are preferred, and fine particles of polyacrylic acid esters or polymethacrylic acid esters are more preferred.

As the heat-sealing resin constituting the innermost layer (B), there may be exemplified high-density polyethylene (HDPE), medium-density polyethylene (MDPE), low-density polyethylene (LDPE), polypropylene (PP), ethylene-vinyl acetate copolymer (EVA), ethylene-methacrylate copolymer (EMA), ethylene-ethyl acrylate copolymer (EEA), ethylene-methyl methacrylate copolymer (EMMA), ethylene-acrylic acid copolymer (EAA), ethylene-methacrylic acid copolymer (EMAA), adhesive polyethylene, ionomer resins, EVA saponification products, linear low-density polyethylene (L-LDPE) or copolymers thereof. Among these heat-sealing resins, those having a melting point lower by at least 50°C (preferably at least 70°C) than a melting point of the PBT homopolymer and/or PBT copolymer constituting the outermost.layer (A), such as linear low-density polyethylene (L-LDPE), are preferred.

The linear low-density polyethylene (L-LDPE) is a copolymer of ethylene and a $C_3$ to $C_{13}$ $\alpha$-olefin having an ethylene content of 86 to 99.5 mol%, and is a low-and medium-density polyethylene which is different from LDPE produced by the conventional high-pressure method. The LDPE produced by the high-pressure method has a multi-branched molecular structure, while the L-LDPE has a linear molecular structure. Examples of the $\alpha$-olefin copolymerized with ethylene in the production of the L-LDPE may include buten-1, penten-1, hexen-1, octen-1, 4-methyl penten-1 or the like. The copolymerization of ethylene and the $\alpha$-olefin may be conducted by low- and medium-pressure methods using a so-called Ziegler-Natta catalyst or metallocene catalyst.

Specific examples of commercially available products of the L-LDPE may include "UNIPOL" produced by Union Carbide Chemicals & Plastics Technology Corporation, "DOWLEX" produced by The Dow Chemical Company, "SCLAIR" produced by DuPont Canada Inc., "MARLEX" produced by Phillips Chemical Company, "NEOZEX" and "ULTZEX" produced by Mitsui Sekiyu Kagaku Co., Ltd., "SUTAMILEX" produced by DSM N. V., or the like.

The laminated film of the present invention may have a gas-barrier resin layer (C) interposed between the outermost layer (A) and the innermost layer (B), if required, especially when used for food-packaging materials requiring a gas-barrier property. Examples of resins constituting the gas-barrier resin layer (C) may include polyamides (PA), ethylene-vinyl acetate copolymer saponification products (EVOH), polyethylene terephthalate (PET), polyethylene naphthalate (PEN), polycarbonate (PC) or the like. Among these resins, polyamides (PA) and ethylene-vinyl acetate copolymer saponification products (EVOH) are preferred, and polyamides (PA) are more preferred.

In the present invention, as the polyamide (PA), there may be used those polyamides produced by polycondensation of (1) lactam having a 3 or more-membered ring or (2) polymerizable $\omega$-amino acid, or polycondensation of (3) diamine with dicarboxylic acid.

Specific examples of the lactam having a 3 or more-membered ring may include $\varepsilon$-caprolactam, enantholactam, $\alpha$-pyrrolidone, $\alpha$-piperidone or the like. Specific examples of the polymerizable $\omega$-amino acid may include 6-amino hexanoic acid, 7-amino heptanoic acid, 11-amino undecanoic acid, 9-amino nonanoic acid or the like.

Specific examples of the diamine may include hexamethylenediamine, nonamethylenediamine, undecamethylenediamine, dodecamethylenediamine, m-xylylenediamine or the like. Specific examples of the dicarboxylic acid may include terephthalic acid, isophthalic acid, adipic acid, sebacic acid, dodecandioic acid, glutaric acid or the like.

Specific examples of the polyamides used in the present invention may include nylon 4, 6, 7, 8, 11, 12, 6.6, 6.10, 6.11, 6.12, 6T, 6/6.6, 6/12, 6/6T, 6I/6T or the like.

The laminated film of the present invention may further have adhesive resin layers between the respective layers. The adhesive resin layers may be usually composed of a modified polyolefin resin (APO). The APO may be produced by copolymerizing and/or graft-polymerizing $\alpha$, $\beta$-unsaturated carboxylic acid or its derivative with a polyolefin resin containing ethylene and/or propylene as main components.

examples of the above polyolefin resin may include polyethylene, polypropylene, ethylene-propylene copolymer, ethylene-buten-1 copolymer, ethylene-vinyl acetate copolymer, ethylene-acrylic acid copolymer, ethylene-ethyl acrylate copolymer, ethylene-sodium acrylate copolymer or the like.

Examples of the above $\alpha$, $\beta$-unsaturated carboxylic acid or its derivative which is copolymerized with the polyolefin resin, may include acrylic acid, methacrylic acid, methyl methacrylate, sodium acrylate, zinc acrylate, vinyl acetate, glycidyl methacrylate or the like. The $\alpha$, $\beta$-unsaturated carboxylic acid or its derivative may be contained in an amount of not more than 40 mol% in a molecular chain of the APO. As the copolymerized modified polyolefin resin, there may be exemplified ethylene-vinyl acetate copolymer, ethylene-acrylic acid copolymer, ethylene-ethyl acrylate copolymer, ethylene-sodium acrylate copolymer or the like.

Examples of the above $\alpha$, $\beta$-unsaturated carboxylic acid or its derivative which is grafted to the polyolefin resin, may include acrylic acid, methacrylic acid, ethacrylic acid, maleic acid, fumaric acid, or anhydrides or esters of these acids. Among these modifying compounds, maleic anhydride is preferred. The amount of the $\alpha$, $\beta$-unsaturated carboxylic acid or its derivative grafted is usually 0.01 to 25% by weight, preferably 0.05 to 1.5% by weight based on the weight of the polyolefin resin.

The graft polymerization reaction may be conducted by an ordinary method, i.e., by melt-blending the polyolefin resin with the α, β-unsaturated carboxylic acid or its derivative at a resin temperature of 150 to 300°C. Upon the graft polymerization reaction, an organic peroxide such as α, α'-bis-t-butylperoxy-p-diisopropylbenzene may be added in an amount of 0.001 to 0.05% by weight in order to effectively conduct the reaction.

The laminated film of the present invention may be produced by a co-extrusion inflation method, and kept in a substantially unstretched condition. The feature of the laminated film of the present invention lies in that the outermost layer (A) thereof has a shape factor of not less than 2.2 which shows a peak shape of Raman spectrum thereof and is represented by the following formula (1):

$$\text{Shape factor} = La/Lb \tag{1}$$

wherein La and Lb represent peak widths being present on higher- and lower-frequency sides, respectively, relative to a perpendicular line drawn from a peak top to a base line formed by a tangent line taken before and after the peak based on carbonyl stretching vibration, and being taken along a horizontal line at a height corresponding to one half of an intensity of the peak.

In Fig. 1, there is shown an explanatory view of the peak shape of Raman spectrum, wherein reference numeral (1) represents a peak based on carbonyl stretching vibration, reference numeral (2) represents a base line, and reference numeral (3) represents a perpendicular line.

The peak (1) is observed at a wavenumber of about 1,719 cm$^{-1}$. As a result of analyzing the curling property and Raman spectrum of many kinds of laminated films according to the present invention, it has been found that when the shape factor of the outermost layer (A) as defined by the above formula (1) is not less than 2.2, the obtained laminated film can be effectively prevented from being curled upon heat-sealing.

Hitherto it is known that the difference in crystallinity (density) of PBT is well reflected by a peak shape based on carbonyl stretching vibration ("J. Polymer Sci.", A-2, Vol. 10, p. 317 (1972)). It is suggested that the peak width (La) of the peak (1) on a higher-frequency side thereof considerably depends upon the amount of an amorphous portion of PBT. The upper limit of the shape factor as defined by the formula (1) is not particularly restricted, and is usually 2.8.

The measurement of Raman spectrum for determining the shape factor (La/Lb) may be conducted under the following conditions using the following measuring device.

<Measuring device>

Device: "NRS-2100" manufactured by Nippon Bunko Co., Ltd. ;
Detector: High-sensitive CCD detector;
Excitation light source: Ar + ion laser; and
Excitation wavelength: 514.5 nm.

<Measuring conditions>

Laser output: 100 mW (excitation light intensity on the surface of specimen);
Beam diameter: 1 mm (beam diameter on the surface of specimen); and
Integration time: 180 sec.

The above-described laminated film of the present invention may be produced, for example, by a water-quenching method. Here, the water-quenching method usually means such a method of introducing a film extruded from a die into a' water vessel disposed underneath the die for cooling, and then winding up the obtained film onto a roll. More specifically, the water vessel having a sizing ring therein is usually disposed underneath the ring-shaped die, and a guide plate and a winding roll are sequentially disposed underneath the water vessel. A plurality of kinds of raw resins is co-extruded into a film through the ring-shaped die while keeping the film in a substantially unstretched condition. The resultant film is cooled by passing through the sizing ring, thereby obtaining a tubular laminated film. The tubular laminated film is fed along the guide plate, folded and then wound up on the winding roll in the form of a double film (tubular film).

The thus obtained laminated film of the present invention is a substantially unstretched film, and preferably has a heat-shrinkage percentage of not more than 5% in each of longitudinal (MD) and transverse (TD) directions when measured according to JIS K 6734.

In the laminated film of the present invention, for example, the outermost layer (A) has a thickness of usually 2 to 50 µm, preferably 4 to 30 µm, more preferably 6 to 20 mm; the innermost layer (B) has a thickness of usually 20 to 100 µm, preferably 30 to 70 µm, more preferably 30 to 50 µm; the gas-barrier resin layer (C) has a thickness of usually 5 to 70 µm, preferably 10 to 50 µm, more preferably 10 to 30 µm; and each adhesive resin layer formed between the above respective layers has a thickness of usually 2 to 30 µm, preferably 5 to 15 µm.

Further, in the present invention, the thickness of the innermost layer (B) (heat-sealing resin layer) is as large as two or more times the thickness of the outermost layer (A) (PBT resin layer). The reason therefor is as follows. That is, it may be difficult to form PBT into a film because of its low melt tension (i.e., low shape retention property). Consequently, the thickness of the heat-sealing resin layer having a high melt tension is increased to compensate the low shape retention property of PBT. In this case, the upper limit of the ratio of the thickness of the innermost layer (B) to that of the outermost layer (A) is usually 10:1.

The laminated film of the present invention can be effectively prevented from being curled upon heat-sealing and, therefore, is suitably applicable to various packaging bags. For example, upon the production of pillow-type packaging bags, the occurrence of defective seal can be prevented during the center seal process in which opposite edges of the unstretched laminated film are overlapped on each other and heat-sealed together.

Next, the packaging bag of the present invention is explained below. The packaging bag of the present invention can be produced by heat-sealing the edges of the tubular laminated film. The heat-sealing may be conducted by a known gusseting technique.

That is, the gusseting technique means such a processing method in which the edges of the tubular film are folded-in and heat-sealed. More specifically, in an ordinary gusseting process, the respective edges of the tubular film are formed into a rectangular shape in section, and a pair of opposed walls thereof are folded into a valley shape inwardly from a substantially center of each wall. Then, the other pair of opposed walls of the tubular film are overlapped on each other, and heat-sealed along edges thereof by means of a linear heat-seal bar.

The heat-sealing process may be conducted by locally heating a portion of the laminated film by a heat sealer. In the present invention, the laminated film is preferably heat-sealed at a temperature not more than the melting point of the PBT resin constituting the outermost layer (A) and not less than the melting point of the heat-sealing resin constituting the innermost layer (B). Under such conditions, the outermost layer (A) is prevented from being melted, so that the laminated film can be heat-sealed while maintaining its shape, resulting in formation of uniform heat-sealed portions. The above effect can be more remarkably observed when those resins having a melting point lower by at least 50°C (preferably at least 70°C) than the melting point of the PBT resin are used as the heat-sealing resin.

Meanwhile, the crystallinity of the heat-sealed portion of the laminated film varies depending upon heat-sealing conditions such as hating temperature, heating time, cooling method after heating or the like. Even though the laminated film initially has a shape factor of not less than 2.2, the shape factor of the heat-sealed portions after heat-sealing undesirably differs from the initial value due to the change in crystallinity thereof. Therefore, the heat-sealing process is preferably conducted such that the shape factor of the heat-sealed portions is in the range of 1.6 to 2.4. More specifically, when the shape factor of the heat-sealed portions is controlled to not less than 1.6 by inhibiting the crystallization thereof, the heat-sealed portions can be enhanced in strength.

The packaging bag of the present invention can be used for packaging industrial products such as electronic parts as well as foods such as hams and sausages, and is especially suitable for packaging foods. Since the container (gusseted bag) of the present invention is free from curling at an open edge thereof, no inconvenience is caused when filling various products therein by a filling and packaging machine. In addition, since the packaging bag of the present invention has a cylinder portion composed of the laminated film having a shape factor of not less than 2.2, the haze thereof can be controlled to usually 2 to 20%, preferably 2 to 15%, resulting in excellent transparency of the obtained bag, i.e., excellent visibility of contents in the bag.

As described above, in accordance with the present invention, there are provided a laminated film which can be effectively prevented from being curled upon heat-sealing, and a packaging bag produced by heat-sealing the laminated film which can be suitably used in a filling and packaging machine. Therefore, the present invention exhibits a large industrial value.

EXAMPLES

The present invention is described in more detail by Examples and Comparative Examples, but the Examples are only illustrative and, therefore, not intended to limit the scope of the present invention thereto.

Various properties were measured by the following methods.

(1) Measurement of shape factor of outermost layer:

A 100 mm-square sheet specimen (laminated film) was sampled from the above tubular body, and the shape factor thereof was measured using the measuring conditions and.

(2) Evaluation of curling property:

A 100 mm-square sheet specimen (laminated film) was sampled from the above tubular body, and allowed to stand in a chamber maintained at a temperature of 23°C and a humidity of 50% for 24 hours. Then, the curling property of the thus treated specimen was evaluated by the following method. That is, the specimen was placed on a horizontal table to examine the curling condition thereof. If the specimen was deformed up to a cylindrical shape, the diameter (mm) of the cylindrical shape was measured. If the specimen is deformed merely into a curved shape, the height (mm) thereof was measured. At the same time, the gusseted bag was observed to determine whether or not any curl was caused at an open end thereof.

(3) Haze:

The haze was measured according to JIS K 7105.

Example 1:

A tubular body of a laminated film having a five-layer structure: Homo-PBT (layer thickness: 8 mm)/APO (layer thickness: 8 µm)/NY: Nylon 6 (layer thickness: 16 µm)/APO (layer thickness: 8 µm)/L-LDPE (layer thickness: 40 µm) was produced by a co-extrusion inflation and water-quenching method (downward water-cooling molding method) using a five-layer co-extrusion ring-shaped die, and wound up on a 3-inch paper tube. Upon the production of the above laminated film, polymethyl methacrylate (PMMA) fine particles having an average particle size of 6 µm as an anti-blocking agent were added in an amount of 2,000 ppm to the PBT. The extrusion temperature was 240°C, the water-cooling temperature was 25°C, the amount of cooling water fed was 15 liters/minute and the winding-up speed was 15 m/minute. The thus obtained tubular body was slit into a predetermined length, and the cut body was subjected to gusseting process, i.e., linearly heat-sealed along an edge thereof to obtain a gusseted bag. The thus obtained gusseted bag was measured and evaluated to determine properties thereof.
The layer structure and main production conditions of the laminated film are shown in Table 1, and the results of the measurement and evaluation of various properties of the laminated film and gusseted bag are shown in Table 2. In Table 2, the "inside" means the side where the innermost layer (heat-sealing resin) is located.

Example 2:

The same procedure as defined in Example 1 was conducted except that Co-PBT was used instead of Homo-PBT, thereby producing a laminated film and a gusseted bag. As the Co-PBT, there was used a polybutylene terephthalate copolymer having a melting point of 222°C and containing as a copolymerized component, polybutyleneoxide glycol having a number-average molecular weight of 1,000 in an amount of 2.5 mol%. The layer structure and main production conditions of the laminated film are shown in Table 1, and the results of the measurement and evaluation of various properties of the laminated film and gusseted bag are shown in Table 2.

Example 3:

The same procedure as defined in Example 1 was conducted except that the gas-barrier resin layer (NY) was omitted from the layer structure in Example 2, thereby producing a laminated film and a gusseted bag. The layer structure and main production conditions of the laminated film are shown in Table 1, and the results of the measurement and evaluation of various properties of the laminated film and gusseted bag are shown in Table 2.

Comparative Examples 1 to 3:

The same procedures as defined in Examples 1 to 3 were respectively conducted except that the amount of cooling water fed was changed to 8 liters/minute, thereby producing a laminated film and a gusseted bag. The layer structure and main production conditions of the laminated film are shown in Table 1, and the results of the measurement and evaluation of various properties of the laminated film and gusseted bag are shown in Table 2.

Comparative Example 4:

The same procedure as defined in Example 1 was conducted except that the cooling method was changed

**EP 1 207 042 B1**

to an air-cooling method, i.e., the extruded film was introduced upwardly from the die, cooled by spraying a cooling air thereto, and then wound up into a roll, thereby producing a laminated film and a gusseted bag. The layer structure and main production conditions of the laminated film are shown in Table 1, and the results of the measurement and evaluation of various properties of the laminated film and gusseted bag are shown in Table 2.

Table 1

| Examples and Comparative Examples | Layer structure | Cooling method | Cooling conditions | |
|---|---|---|---|---|
| | | | Cooling water temperature (°C) | Amount of cooling water fed (l/min.) |
| Example 1 | Homo-PBT/APO/ NY/ APO/L-LDPE | Water-cooling | 25 | 15 |
| Example 2 | Co-PBT/APO/ NY/ APO/L-LDPE | Water-cooling | 25 | 15 |
| Example 3 | Co-PBT/APO/ L-LDPE | Water-cooling | 25 | 15 |
| Comparative Example 1 | Homo-PBT/APO/ NY/ APO/L-LDPE | Water-cooling | 25 | 8 |
| Comparative Example 2 | Co-PBT/APO/ NY/ APO/L-LDPE | Water-cooling | 25 | 8 |
| Comparative Example 3 | Co-PBT/APO/ L-LDPE | Water-cooling | 25 | 8 |
| Comparative Example 4 | Homo-PBT/APO/ NY/ APO/L-LDPE | Air-cooling | - | - |

Table 2

| Examples and Comparative Examples | Shape factor (La/Lb) | Curling (direction) | | Haze (%) |
|---|---|---|---|---|
| | | Laminated film (mm) | Gusseted bag | |
| Example 1 | 2.32 | 4 | None | 5.5 |
| Example 2 | 2.38 | 6 | None | 5.3 |
| Example 3 | 2.72 | 0 | None | 4.8 |
| Comparative Example 1 | 1.81 | 13 (winding diameter) | Occurred at inside | 12.3 |
| Comparative Example 2 | 1.86 | 25 | Occurred at inside | 11.8 |
| Comparative Example 3 | 2.12 | 26 | Occurred at inside | 9.5 |
| Comparative Example 4 | 1.81 | 7 (winding diameter) | Occurred at inside | 33.7 |

**Claims**

1. A laminate film comprising:

   a first layer (A) comprising a polybutylene terephthalate homopolymer, a polybutylene terephthalate copolymer or a mixture of the polybutylene terephthalate homopolymer and the polybutylene terephthalate copolymer; and

a second layer (B) comprising a heat-sealing resin;
said first layer (A) having a shape factor of not less than 2.2, which shows a peak shape of Raman spectrum thereof and is represented by the following formula (1):

$$\text{Shape factor} = La/Lb \tag{1}$$

wherein La and Lb represent peak widths being present on higher- and lower-frequency sides, respectively, relative to a perpendicular line drawn from a peak top to a base line formed by a tangent line taken before and after the peak based on carbonyl stretching vibration, and being taken along a horizontal line at a height corresponding to one half of an intensity of the peak.

2. A film according to claim 1, wherein said layer (A) contains an anti-blocking agent.

3. A film according to claim 2, wherein said anti-blocking agent is contained in an amount of 100 to 10,000 ppm based on the weight of the resin.

4. A film according to claim 1, 2 or 3, wherein said heat-sealing resin comprises one or more of high-density polyethylene, medium-density polyethylene, low-density polyethylene, polypropylene, ethylene-vinyl acetate copolymer, ethylene-methacrylate copolymer, ethylene-ethyl acrylate copolymer, ethylene-methyl methacrylate copolymer, ethylene acrylic acid cocpolymer, ethylene methacrylic acid copolymer, adhesive polyethylene, ionomer resin, ethylene-vinyl acetate copolymer saponification product, linear low-density polyethylene and copolymers thereof.

5. A film according to any preceding claim, wherein said layer (A) has a thickness of 2 to 50 $\mu$m, and said layer (B) has a thickness of 20 to 100 $\mu$m.

6. A film according to any preceding claim, wherein the thickness of said layer (B) is at least twice that of said outermost layer (A).

7. A film according to any preceding claim, further comprising a gas-barrier resin layer (C) interposed between said layer (A) and said layer (B).

8. A film according to claim 7, wherein said gas-barrier resin layer (C) comprises one or more of polyamide, ethylene-vinyl acetate copolymer saponification product, polyethylene terephthalate, polyethylene naphthalate and polycarbonate.

9. A film according to claim 7 or 8, wherein said gas-barrier resin layer (C) has a thickness of 5 to 70 $\mu$m.

10. A film according to any preceding claim, further comprising one or more adhesive resin layers, comprising modified polyolefin resin, interposed between one or more pairs of adjacent layers (A), (B) and if present (C).

11. A film according to claim 10, wherein the or each of said adhesive resin layers has a thickness of 2 to 30 $\mu$m.

12. A film according to claim 1, wherein a heat-shrinkage percentage in each of two mutually perpendicular directions of the film is not more than 5.

13. A film according to any preceding claim, in which the layer (B) forms an external surface thereof; and in which layer (A) optionally forms an opposite external surface thereof.

14. A packaging bag the walls of which comprise film according to any preceding claim.

15. A packaging bag according to claim 14, in which the film has a haze of 2 to 20%.

16. Use of a packaging bag according to claim 14 or 15, for packaging foods.

17. A method of producing a film according to any of claims 1 to 13, which comprises inflation co-extrusion of material of said layers (A) and (B) and optionally of said layer (C).

**18.** A method according to claim 17, which comprises co-extruding a plurality of raw resins through a ring-shaped die under substantially stretch-free conditions, and then cooling the co-extruded film passing through a sizing ring by a water-quenching method.

**19.** A method of forming a bag according to claim 14 or 15, which comprises heat-sealing together portions of a film according to any of claims 1 to 13.

**Patentansprüche**

**1.** Laminatfilm, der umfasst:

eine erste Schicht (A), die ein Polybutylenterephthalat-Homopolymer, ein Polybutylenterephthalat-Copolymer oder eine Mischung des Polybutylenterephthalat-Homopolymers und des Polybutylenterephthalat-Copolymere umfasst; und

eine zweite Schicht (B), die ein heissiegelfähiges Harz umfasst;

wobei die erste Schicht (A) einen Formfaktor von nicht weniger als 2,2 besitzt, der eine Peakform ihres Raman-Spektrums angibt und durch die nachstehende Formel (1) wiedergegeben wird:

$$\text{Formfaktor} = La/Lb \tag{1}$$

worin La und Lb Peakbreiten bezeichnen, die auf der Seite der höheren bzw. niedrigeren Frequenz vorliegen, relativ zu einer senkrechten Linie, die von einer Peakspitze zu einer Basislinie gezogen wird, die gebildet wird durch eine Tangente, die vor und nach dem Peak auf Basis der Carbonyl-Streckschwingung genommen wird, und die entlang einer waagerechten Linie in einer Höhe, die der Hälfte der Intensität des Peaks entspricht, genommen werden.

**2.** Film gemäss Anspruch 1, wobei die Schicht (A) ein Antiblockmittel enthält.

**3.** Film gemäss Anspruch 2, wobei das Antiblockmittel in einer Menge von 100 bis 10.000 ppm, bezogen auf das Gewicht des Harzes, enthalten ist.

**4.** Film gemäss Anspruch 1, 2 oder 3, wobei das heissiegelfähige Harz einen oder mehrere Vertreter aus Polyethylen hoher Dichte, Polyethylen mittlerer Dichte, Polyethylen niedriger Dichte, Polypropylen, Ethylen-Vinylacetat-Copolymer, Ethylen-Methacrylat-Copolymer, Ethylen-Ethylacrylat-Copolymer, Ethylen-Methylmethacrylat-Copolymer, Ethylen-Acrylsäure-Copolymer, Ethylen-Methacrylsäure-Copolymer, klebendem Polyethylen, Ionomerharz, dem Verseifungsprodukt von Ethylen-Vinylacetat-Copolymeren, linearem Polyethylen niedriger Dichte und Copolymeren davon umfasst.

**5.** Film gemäss mindestens einem der vorhergehenden Ansprüche, wobei die Schicht (A) eine Dicke von 2 bis 50 µm und die Schicht (B) eine Dicke von 20 bis 100 µm besitzt.

**6.** Film gemäss mindestens einem der vorhergehenden Ansprüche, wobei die Dicke der Schicht (B) mindestens zweimal so gross ist wie die der äussersten Schicht (A).

**7.** Film gemäss mindestens einem der vorhergehenden Ansprüche, der ferner eine Gasbarriere-Harzschicht (C) umfasst, die zwischen der Schicht (A) und der Schicht (B) angeordnet ist.

**8.** Film gemäss Anspruch 7, wobei die Gasbarriere-Harzschicht (C) einen oder mehrere Vertreter aus Polyamid, dem Verseifungsprodukt von Ethylen-Vinylacetat-Copolymeren, Polyethylenterephthalat, Polyethylennaphthalat und Polycarbonat umfasst.

**9.** Film gemäss Anspruch 7 oder 8, wobei die Gasbarriere-Harzschicht (C) eine Dicke von 5 bis 70 µm besitzt.

**10.** Film gemäss mindestens einem der vorhergehenden Ansprüche, der ferner eine oder mehrere klebende Harzschichten umfasst, die modifiziertes Polyolefinharz umfassen und zwischen einem oder mehreren Paaren der benachbarten Schichten (A), (B) und gegebenenfalls (C) angeordnet sind.

11. Film gemäss Anspruch 10, wobei die oder jede der klebenden Harzschichten eine Dicke von 2 bis 30 µm besitzt.

12. Film gemäss Anspruch 1, wobei die prozentuale Wärmeschrumpfung in jeder der zwei zueinander senkrechten Richtungen des Films nicht grösser als 5 ist.

13. Film gemäss mindestens einem der vorhergehenden Ansprüche, in dem die Schicht (B) dessen äussere Oberfläche bildet und in dem die Schicht (A) gegebenenfalls dessen entgegengesetzte äussere Oberfläche bildet.

14. Packungstüte, deren Wände einen Film gemäss mindestens einem der vorhergehenden Ansprüche einschliessen.

15. Verpackungstüte gemäss Anspruch 14, wobei der Film eine Trübung von 2 bis 20 % besitzt.

16. Verwendung einer Verpackungstüte gemäss Anspruch 14 oder 15 zum Einpacken von Lebensmitteln.

17. Verfahren zur Herstellung eines Films gemäss mindestens einem der Ansprüche 1 bis 13, welches die Aufblas-Coextrusion von Material der Schichten (A) und (B) und gegebenenfalls der Schicht (C) umfasst.

18. Verfahren gemäss Anspruch 17, welches die Coextrusion mehrerer Rohharze durch eine ringförmige Düse unter im wesentlichen verstreckungsfreien Bedingungen und anschliessendes Kühlen des coextrudierten Films, der durch einen Kalibrierring geführt wird, mit Hilfe eines Wasserabkühlungsverfahrens umfasst.

19. Verfahren zur Ausbildung einer Tüte gemäss Anspruch 14 oder 15, welches das Heissiegeln von Bereichen eines Films gemäss mindestens einem der Ansprüche 1 bis 13 umfasst.

## Revendications

1. Film stratifié comprenant :

   une première couche (A) comprenant un homopolymère de type polytéréphtalate de butylène, un copolymère de polytéréphtalate de butylène ou un mélange de l'homopolymère de type polytéréphtalate de butylène et du copolymère de polytéréphtalate de butylène ; et
   une deuxième couche (B) comprenant une résine thermosoudable ;
   ladite première couche (A) ayant un facteur de forme non inférieur à 2,2 qui révèle une forme de pic du spectre Raman de celle-ci et est représenté par la formule (1) suivante :

   $$\text{facteur de forme} = La/Lb \tag{1}$$

   dans laquelle La et Lb représentent respectivement les largeurs de pic des côtés à fréquences relativement élevées et relativement faibles, par rapport à une ligne perpendiculaire s'étendant à partir du sommet du pic jusqu'à une ligne de base formée par une ligne tangente avant et après le pic de vibration d'extension de groupe carbonyle, et selon une ligne horizontale s'étendant à la hauteur correspondant à la moitié de l'intensité du pic.

2. Film selon la revendication 1, dans lequel ladite couche (A) contient un agent d'anti-adhérence par contact.

3. Film selon la revendication 2, dans lequel ledit agent d'anti-adhérence par contact est contenu selon une quantité de 100 à 10 000 ppm par rapport au poids de la résine.

4. Film selon la revendication 1, 2 ou 3, dans lequel ladite résine thermosoudable comprend un ou plusieurs composants choisis parmi le polyéthylène de haute densité, le polyéthylène de densité moyenne, le polyéthylène de basse densité, le polypropylène, un copolymère d'éthylène et d'acétate de vinyle, un copolymère d'éthylène et de méthacrylate, un copolymère d'éthylène et d'acrylate d'éthyle, un copolymère d'éthylène et de méthacrylate de méthyle, un copolymère d'éthylène et d'acide acrylique, un copolymère d'éthylène et d'acide méthacrylique, un polyéthylène adhésif, une résine d'ionomère, un produit de saponification de copolymère d'éthylène et d'acétate de vinyle, le polyéthylène linéaire de basse densité et leurs copolymères.

5. Film selon l'une quelconque des revendications précédentes, dans lequel ladite couche (A) a une épaisseur de 2 à 50 μm, et ladite couche (B) a une épaisseur de 20 à 100 μm.

6. Procédé selon l'une quelconque des revendications précédentes, dans lequel l'épaisseur de ladite couche (B) est d'au moins le double de celle de ladite couche la plus extérieure (A).

7. Film selon l'une quelconque des revendications précédentes, comprenant en outre une couche de résine d'arrêt de gaz (C) interposée entre ladite couche (A) et ladite couche (B).

8. Film selon la revendication 7, dans lequel ladite couche de résine d'arrêt de gaz (C) comprend un ou plusieurs composants choisis parmi un polyamide, un produit de saponification de copolymère d'éthylène et d'acétate de vinyle, le polytéréphtalate d'éthylène, le polynaphtalate d'éthylène et un polycarbonate.

9. Film selon la revendication 7 ou 8, dans lequel ladite couche de résine d'arrêt de gaz (C) a une épaisseur de 5 à 70 μm.

10. Film selon l'une quelconque des revendications précédentes, comprenant en outre une ou plusieurs couches de résine adhésive, comprenant une résine de polyoléfine modifiée interposée entre une ou plusieurs paires de couches adjacente (A), (B) et, s'il y en a, (C).

11. Film selon la revendication 10, dans lequel la ou chacune desdites couches de résine adhésive a une épaisseur de 2 à 30 μm.

12. Film selon la revendication 1, dans lequel le pourcentage de retrait thermique dans chacune de deux directions réciproquement perpendiculaires du film, n'est pas supérieur à 5.

13. Film selon l'une quelconque des revendications précédentes, dans lequel la couche (B) forme une surface externe de celui-ci ; et dans lequel la couche (A) forme éventuellement la surface externe opposée de celui-ci.

14. Sac d'emballage dont les parois comprennent un film selon l'une quelconque des revendications précédentes.

15. Sac d'emballage selon la revendication 14, dans lequel le film a un indice de voilage de 2 à 20 %.

16. Utilisation d'un sac d'emballage selon la revendication 14 ou 15, pour l'emballage d'aliments.

17. Procédé de production d'un film selon l'une quelconque des revendications 1 à 13, comprenant une coextrusion avec gonflage de la matière desdites couches (A) et (B), et éventuellement de ladite couche (C).

18. Procédé selon la revendication 17, comprenant une coextrusion de plusieurs résines de départ à travers une filière annulaire dans des conditions à peu près sans étirage, puis un refroidissement du film coextrudé par passage à travers un anneau de calibrage selon un procédé de refroidissement brusque à l'eau.

19. Procédé de formation d'un sac selon la revendication 14 ou 15, comprenant un thermosoudage ensemble de parties d'un film selon l'une quelconque des revendications 1 à 13.

# FIG.1